# EUROPÄISCHE PATENTSCHRIFT

(11) **EP 1 818 964 B1**
(45) Veröffentlichungstag und Bekanntmachung des Hinweises auf die Patenterteilung: **19.01.2011**
(21) Anmeldenummer: 07101078.9
(22) Anmeldetag: 24.01.2007
(51) Int. Cl.: H01H 85/20, H02B 1/18, H01H 9/10, H01H 85/54

(54) **Sicherungsleiste mit seitlichen Abgangskontakten und seitlichem Adaptermodul**
Fuse rail with lateral outlet contacts and lateral adapter module
Barrette de fusibles avec contacts de sortie latéraux et module adaptateur latéral

(30) Priorität: 09.02.2006 DE 102006006050
(43) Veröffentlichungstag der Anmeldung: 15.08.2007
(73) Patentinhaber: Wöhner GmbH & Co. KG Elektrotechnische Systeme, 96472 Rödental (DE)
(72) Erfinder: Büttner, Alex, 96472 Rödental (DE)
(74) Vertreter: Skuhra, Udo

(56) Entgegenhaltungen:
- EP-A- 1 585 156
- DE-A1- 10 054 168
- DE-A1-102006 006 051
- DE-U1- 8 804 560

## Beschreibung

Die Erfindung betrifft eine Sicherungsleiste mit den Merkmalen des Oberbegriffs des Patentanspruchs 1.

Eine Sicherungsleiste ist beispielsweise aus der DE 100 54 168 und EP-A-1585156 bekannt. Derartige Sicherungsleisten sind vorzugsweise zwei- oder dreipolig ausgelegt und werden auf einer Gruppe aus zwei oder drei Stromschienen aufgeklemmt. Derartige Sicherungsleisten beinhalten pro Leiter eine Sicherungseinheit, die zwischen dem betreffenden Leiter der Stromschienengruppe einerseits und einem nachfolgenden Gerät im Stromkreis liegt. Üblicherweise sind derartige Sicherungsleisten mit Anschlussklemmen versehen, die vorzugsweise in einem Stirnbereich der Leiste ausgebildet sind und zum Anschluss von Verdrahtungen zu dem jeweiligen Schaltgerät dienen. Bei derartigen Sicherungsleisten befindet sich im Bereich eines Klemmfußes ein Kontaktelement, welches die zugehörige Stromschiene kontaktiert. Dieses Kontaktelement ist über Leiter mit einer Seite des zugehörigen Sicherungselementes verbunden, während die andere Seite des Sicherungselementes elektrisch mit einer Schraubklemme verbunden ist, an der ein Leiter des betreffenden Schaltgerätes oder dergleichen angeschlossen werden kann.

Der Erfindung liegt die Aufgabe zugrunde, eine Sicherungsleiste der eingangs genannten Art so auszubilden, dass die Abgangskontakte ein direktes und vorzugsweise schraubenloses Anschließen von Abgangsleitungen ermöglichen.

Weiterhin soll eine Sicherungsleiste geschaffen werden, die optional mit stirnseitigen Anschlussklemmen ausgerüstet werden kann.

Diese Aufgabe wird erfindungsgemäß durch die im Patentanspruch 1 angegebenen Merkmale gelöst.

Weitere Ausgestaltungen der Erfindung ergeben sich aus den Unteransprüchen.

Die Erfindung schafft eine Sicherungsleiste, insbesondere eine brückenförmige Sicherungsleiste zum direkten Aufstecken auf ein Stromschienensystem, bei dem die Abgangskontakte jeweils seitlich der Sicherungsleiste ausgebildet sind. Damit ist ein direktes Anschließen von Abgangsleitungen an den seitlichen Abgangskontakten möglich.

Ein wesentlicher Vorteil bei der erfindungsgemäßen Sicherungsleiste besteht darin, dass die üblicherweise bei bekannten Sicherungsleisten innerhalb des Gehäuses notwendigen Leitungsbahnen zu den stirnseitigen Anschlussklemmen entfallen, d. h. die Sicherungsleiste insgesamt kann eine gefälligere und kürzere Form aufweisen und der in Folge von isolierenden Rippen notwendige in Längsrichtung der Leiste verlaufende Aufwand zur Isolierung der zueinander benachbarten Leiterführungen entfällt.

Gemäß einer bevorzugten Ausführungsform sind die seitlichen Abgangskontakte mit Klemmfedern ausgerüstet, wodurch ein schraubenloses Anschließen der Abgangsleitungen ermöglicht wird, d. h. die Abgangsleitungen brauchen zum Anschluss an die Sicherungsleiste nur in die jeweiligen Öffnungen eingesteckt werden und werden automatisch verrastet. Zum Lösen der Abgangsleitungen ist eine zusätzliche Öffnung vorgesehen, durch die mittels eines Werkzeuges die Verrasterung zwischen Abgangskontakt und Abgangsleitung aufgehoben werden kann.

Gemäß vorliegender Erfindung sind alle funktionsrelevanten Teile eines Poles in dem jeweiligen Polabschnitt, d. h. innerhalb der Sicherungsleiste im Bereich des jeweiligen Anschlussblocks 10 bzw. 11 bzw. 12 untergebracht, nämlich die Sicherungsaufnahme, die Zu- und Abgangskontakte und die jeweilige Abgangsklemme, vorzugsweise in Form einer schraubenlosen Federklemme. Jeder dieser Polabschnitte bildet also einen Teilbereich in Form einer funktionsfähigen Einheit. Auf diese Weise können die Sicherungsleisten als zweipolige und bei Kombination von zwei derartigen Sicherungsleisten vierpolige Ausführungsformen gestaltet werden.

Bei der erfindungsgemäßen Sicherungsleiste sind pro Abgangskontakt seitlich zur Leiste vorgesehene Anschlussblöcke ausgebildet, welche die Abgangskontakte in leicht zugängiger Weise enthalten. Bei einer bevorzugten Ausführungsform sind in den seitlich angeformten Anschlussblöcken pro Abgangskontakt vertikal verlaufende, d. h. senkrecht zur Längsachse verlaufende Öffnungen zum Einführen der Abgangsleitungen vorgesehen sowie jeweils vorzugsweise eine Öffnung ebenfalls in vertikaler Ausrichtung zur Einführung eines Werkzeugs, beispielsweise Schraubenziehers zum Lösen der Verbindung zwischen Abgangskontakt und Abgangsleitung.

Die Sicherungsleiste ist zweipolig, jedoch aber auch mehrpolig ausführbar.

Die Erfindung schafft weiterhin eine Sicherungsleiste, die seitliche Abgangskontakte hat, welche im Bedarfsfall mittels einer Adapterleiste derart modifiziert werden kann, dass stirnseitige Anschlussklemmen bereitgestellt werden können.

Die Sicherungsleiste weist bei einer Ausführungsform seitlich des Gehäuses jeweils einen Anschlussblock je Pol auf, wobei in jedem Anschlussblock ein Abgangskontakt zum vorzugsweise schraubenlosen Anschließen von Abgangsleitungen enthalten ist und wobei jeder Abgangskontakt über das jeweilige Sicherungselement einen Stromkreis zum zugehörigen Kontaktelement für die Kontaktierung jeweils einer Stromschiene bildet.

Bei einer weiteren Ausführungsform beinhaltet jeder Anschlussblock einer Führung zum Einführen von Abgangsleitungen.

Weiterhin kann jeder Anschlussblock eine weitere, vorzugsweise schlitzförmige Öffnung aufweisen zur Einführung eines Werkzeuges in Richtung auf den Abgangskontakt zur Freigabe einer Abgangsleitung.

Die Führungen sind vorzugsweise im Wesentlichen senkrecht zur Längsachse der Sicherungsleiste ausgebildet. Jeder Abgangskontakt beinhaltet vorzugsweise einen Kontakt und eine Klemmfeder, wobei die Klemmfeder eine Federzunge aufweist, die unter Federvorspannung gegen einen Kontaktabschnitt des Kontaktes steht. Dabei kann jeder Kontakt mit einem verlängerten Kontaktabschnitt versehen sein, an dem ein vom Kontakt weg weisender Abschnitt ausgebildet ist, welcher eine Kontaktzunge zur Aufnahme der Klemmfeder aufweist, wobei die Klemmfeder seitlich zum Kontakt versetzt vorgesehen ist.

Die Klemmfeder ist vorzugsweise ein zum Kontakt separates Teil und weist einen Schenkel mit einem Schlitz aufweist, derart, dass innerhalb des Schlitzes eine Kontaktfederzunge der Klemmfeder verstellbar angeordnet ist und der Schlitz die Kontaktzunge des Kontaktes aufnimmt. Jeder Kontakt beinhaltet vorzugsweise zwei zueinander etwa parallele, spiegelsymmetrisch zueinander liegende Kontaktzungen, wobei die beiden Kontaktzunge durch eine im Wesentlichen U-förmige Federklammer eingefasst sind.

Das Gehäuse weist vorteilhafterweise ein Gehäuseunterteil auf, in welchem Aussparungen zur Aufnahme der Kontakte ausgebildet sind.

Bei einer weiteren Ausgestaltung ist die Sicherungsleiste zweipolig ausgebildet und besitzt zumindest an einer Stirnseite Verbindungsmittel zur Aufnahme einer weiteren Sicherungsleiste.

Die Schlitze sind vorteilhaft parallel zu den Führungen vorgesehen und fluchten weitgehend zu einem V-förmigen Schenkelabschnitt der jeweiligen Kontaktzunge.

Im Folgenden wird eine bevorzugte Ausführungsform anhand der Zeichnungen zur Erläuterung weiterer Merkmale beschrieben. Es zeigen:
- Fig. 1: eine Perspektivansicht der erfindungsgemäßen Sicherungsleiste von der Seite mit den Anschlussblöcken,
- Fig. 2: eine Ansicht der Sicherungsleiste gemäß Fig. 1 bei gegenüber Fig. 1 um 180° gedrehter Sicherungsleiste,
- Fig. 3: eine Perspektivansicht der Sicherungsleiste von unten entsprechend Fig. 1,
- Fig. 4: eine Darstellung der Sicherungsleiste entsprechend Fig. 2 mit entfernten Seitenwänden zur Darstellung der Kontaktführung,
- Fig. 5 eine: Perspektivansicht zur Darstellung des Abgangkontaktes zusammen mit dem zugehörigen Kontaktelement und
- Fig. 6: eine schematische Darstellung von zwei zweipoligen Sicherungsleisten
- Fig. 7: veranschaulicht eine bevorzugte Ausführungsform einer Sicherungsleiste mit im Wesentlichen demjenigen Aufbau, wie er unter Bezugnahme auf Fig. 1 bis 5 beschrieben ist.
- Fig. 8: ist eine Ansicht der Stirnseite der Sicherungsleiste, aus Richtung des Pfeiles A in Fig. 7 gesehen,
- Fig. 9: zeigt eine Perspektivansicht einer Adapterleiste,
- Fig. 10: eine Seitenansicht einer bevorzugten Ausführungsform der Adapterleiste nach Fig. 9, und
- Fig. 11: eine gegenüber Fig. 1 abgewandelte Ausführungsform

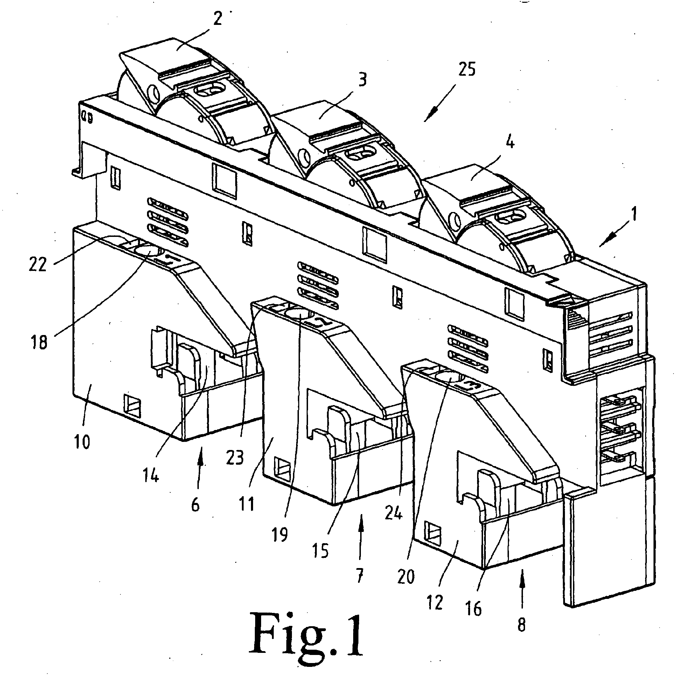

Fig. 1 zeigt eine dreipolige Sicherungsleiste, die aus einem Gehäuse 1 besteht, vorzugsweise aus Kunststoff. Das Gehäuse kann in ein Gehäuseoberteil und eine Gehäuseunterteil aufgegliedert sein, was in Fig. 1 nicht weiter dargestellt ist. Innerhalb des Gehäuses 1 befinden sich bei der in Fig. 1 gezeigten dreipoligen Sicherungsleiste drei Hebel 2, 3, 4, durch deren Betätigung innerhalb des Gehäuses drehbar gelagerte Sicherungsaufnahmen derart verstellbar sind, dass die in den Sicherungsaufnahmen vorhandenen Sicherungen entnommen bzw. eingelegt werden können. An der Unterseite der Sicherungsleiste befinden sich jeweils ein Klemmfuß 6, 7, 8, der auf jeweils eine nicht dargestellte Stromschiene aufgeschoben wird.

Dieses Prinzip ist an sich bekannt.

Seitlich der Sicherungsleiste sind Anschlussblöcke 10, 11, 12 vorgesehen, die den jeweiligen Klemmfuß 6, 7, 8 teilweise integriert aufnehmen, wobei die Anschlussblöcke 10, 11, 12 in Längsrichtung der Sicherungsleiste zueinander beabstandet bzw. getrennt sind. Jeder Anschlussblock 10, 11, 12 weist eine Aussparung 14, 15, 16 auf, derart, dass der betreffende, darin angeordnete Klemmfußbereich über die jeweilige Stromschiene verlagert werden kann.

Innerhalb jedes Anschlussblocks 10, 11, 12 ist zumindest eine vorzugsweise zylindrische Öffnung oder Führung 18, 19, 20 ausgebildet, die dazu dient, dass eine Abgangsleitung vorzugsweise vertikal nach unten verlagert und in eine noch zu beschreibende Kontaktanordndung eingeschoben werden kann. Neben der Öffnung oder Führung 18, 19, 20 befindet sich pro Anschlussblock 10, 11, 12 jeweils eine weitere vorzugsweise schlitzförmige Öffnung oder Führung 22, 23, 24, die dazu dient, eine einmal hergestellte Verbindung zwischen der Kontaktanordnung und der Abgangsleitung im Bedarfsfalle mittels eines Werkzeuges zu lösen.

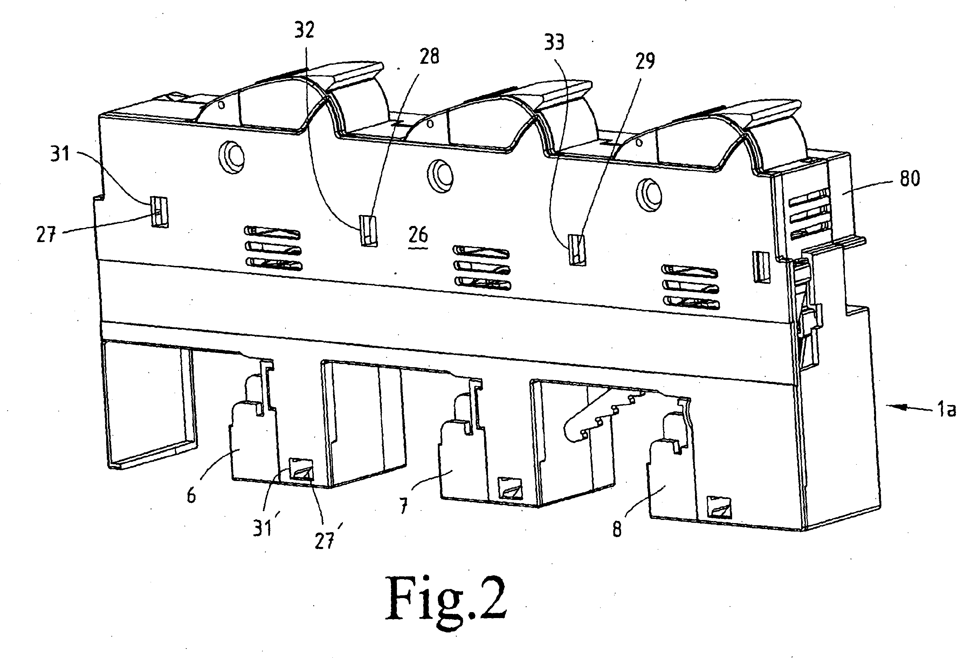

Fig. 2 zeigt eine Ansicht der Sicherungsleiste entsprechend Fig. 1 aus Richtung des in Fig. 1 mit 25 bezeichneten Pfeiles und zeigt die Klemmfüße 6, 7, 8 sowie eine Abschlussplatte 26, die am Gehäuseoberteil z. B. durch Rastzähne 27, 28, 29 fixiert ist, welche in eine entsprechende Öffnung 31, 32, 33 eingreifen, die jeweils in der Platte oder Wand 26 ausgebildet sind.

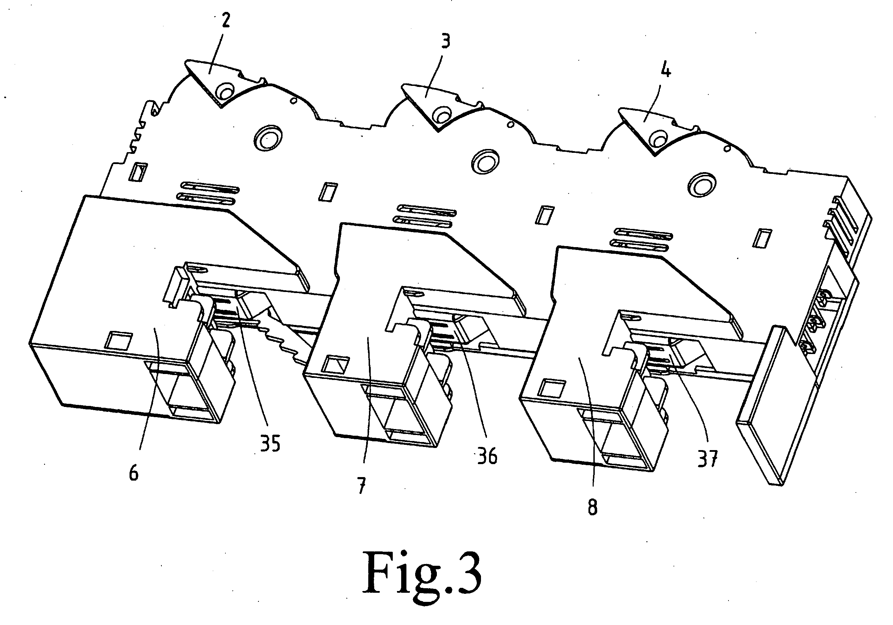

Fig. 3 zeigt eine Ansicht der Sicherungsleiste von unten entsprechend der Darstellung nach Fig. 1 und veranschaulicht Kontaktelemente 35, 36, 37, die oberhalb der Klemmfüße 6, 7, 8 in das Gehäuse eingesetzt sind, um nach dem Aufsetzen der Sicherungsleiste auf die betreffenden Stromschienen einen elektrischen Kontakt gegenüber den Stromschienen herzustellen.

Aus der vorstehenden Beschreibung geht hervor, dass an der Unterseite des Gehäuses 1 Kontaktelemente 35, 36, 37 oberhalb der Klemmfüße 6, 7, 8 ausgebildet sind, um die Stromschienen zu kontaktieren. Die Kontaktelemente 35, 36, 37 sind über einen Kontaktpfad mit einem Ende der in das Gehäuse 1 eingesetzten Sicherungselemente verbunden, während die andere Seite der Sicherungselemente über einen Kontaktweg zu einer Kontaktanordnung geführt ist, die sich innerhalb der seitlichen Anschlussblöcke 10, 11, 12 befindet, wie dies nachfolgend näher erläutert wird.

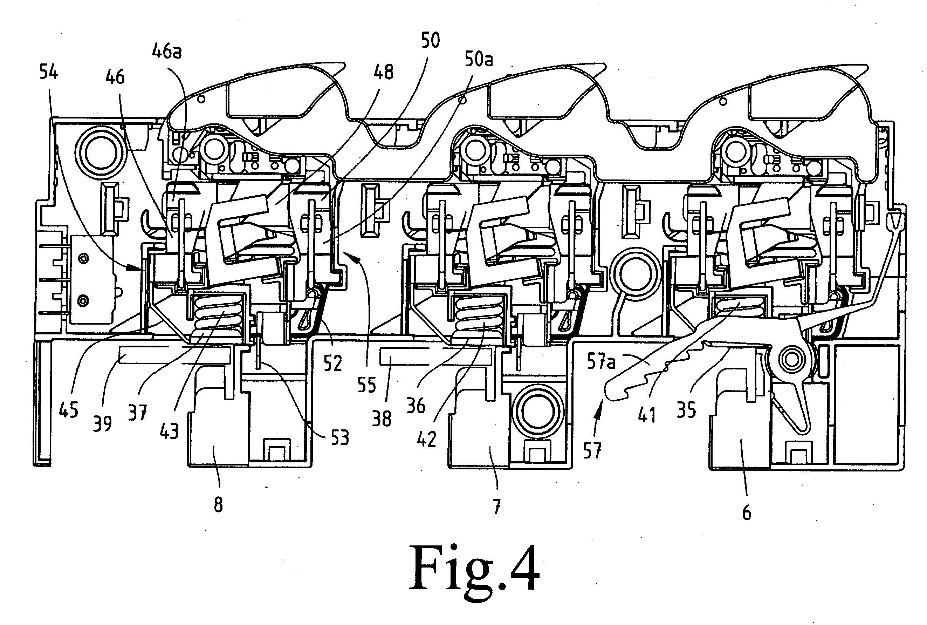

Fig. 4 zeigt eine Seitenansicht der Sicherungsleiste entsprechend Fig. 2, wobei die Wand oder Platte 26 entfernt ist und damit die Kontaktfiihrung innerhalb des Gehäuses 1 erkennbar ist. Zwei der drei Stromschienen sind bei der dreipoligen Sicherungsleiste nach Fig. 4 durch die Bezugszeichen 38, 39 angedeutet. Die Kontaktelemente 35, 36, 37 sind durch Federn 41, 42, 43 in Richtung auf die betreffenden Stromschienen 38, 39 vorgespannt, um einen guten elektrischen Kontakt zwischen den Kontaktelementen 35 bis 37 und den zugehörigen Stromschienen 38, 39 zu gewährleisten. Hinsichtlich des Kontaktelementes 37 verläuft der Stromkreis vom Kontaktelement 37 über einen Kontaktabschnitt 45 zu einem Kontakt 46, der aus zwei im Wesentlichen parallelen, spiegelsymmetrisch zueinander verlaufenden Kontaktzungen 46a besteht, wie dies noch nachfolgend näher erläutert wird. Die Kontaktzungen 46a umgreifen ein Ende eines Sicherungselementes 48, das z. B. mit einem zylindrischen, leitenden Element versehen ist, wodurch eine Seite des Sicherungselementes 48 bzw. einer Schmelzsicherung elektrisch kontaktiert wird. Das andere Ende der Sicherung bzw. des Sicherungselementes 48 weist ebenfalls beispielsweise einen zylindrisch geformten Leiterabschnitt auf, der mit einem weiteren Kontakt 50 in elektrischer Verbindung steht, wobei der Kontakt 50 entsprechend dem Kontakt 46 zwei im Wesentlichen spiegelsymmetrisch zueinander verlaufende Kontaktzungen 50a aufweist, die das leitende Ende des Sicherungselementes 48 kontaktieren. Vom Kontakt 50 geht der Stromkreis über einen Kontaktabschnitt 52 zum seitlich angeordneten Abgangskontakt 53.

Einzelheiten der Aufnahme der Sicherungselemente 48 werden nicht weiter erläutert, da sie nicht Gegenstand vorliegender Erfindung sind.

Aus Fig. 4 ist ersichtlich, dass die Kontakte 46, 48 von der aus Fig. 4 erkennbaren Seite her in das Gehäuse auf einfache Weise eingeschoben bzw. eingesetzt werden können. Die Kontakte 46, 50 werden nachfolgend noch näher erläutert. Zur Aufnahme der Kontakte 46, 48 sind in dem Gehäuse entsprechende Aussparungen vorgesehen, die gewährleisten, dass die Kontakte schnell und sicher von der Seite her in diese Aussparungen und/oder Rippen bzw. Vorsprünge eingeschoben werden können und verrutschsicher im Gehäuse verbleiben. Nach dem Einbringen der Kontakte 46, 50 wird die in Fig. 4 offene Seite des Gehäuses durch die Abdeckung bzw. Platte 26 verschlossen, wobei die Platte 26 in der beschriebenen Weise gegenüber dem Gehäuse verrastet oder auf andere Weise befestigt wird. Die Kontakte 46, 50 sind in Bezug au die Kontaktzungen 46a, 50a im Wesentlichen und vorzugsweise zueinander identisch ausgebildet.

Aus vorstehender Erläuterung ergibt sich, dass die Aussparungen 54 und 55 zur Aufnahme der Kontakte 46, 50 vorzugsweise weitgehend der Form der Kontakte 46, 50 entsprechen, um diese Kontakte sicher und unverrückbar aufzunehmen. Für die Kontaktabschnitte 45, 52 können in dem Gehäuse entsprechende Führungsschlitze oder Aussparungen vorgesehen sein. Die Kontaktabschnitte 45, 52 sind zueinander unterschiedlich ausgebildet. Dies wird nachstehend in Bezug auf den Abschnitt 52 näher beschrieben. Der Abschnitt 45 stellt dagegen lediglich einen Verbindungsabschnitt zum Kontakt 37 dar.

Gegenüber den Figuren 1 bis 3 gleiche Teile sind in Fig. 4 mit gleichen Bezugszeichen versehen und werden hier nicht nochmals erläutert.

Um die Sicherungsleiste gemäß Fig. 1 bis 4 sicher gegenüber den zugehörigen Stromschienen 38, 39 zu positionieren und zu halten, ist an dem in Fig. 4 rechten Klemmfuß 6 eine unter Federvorspannung stehende Rastsperre 57 vorgesehen, die vorzugsweise einen mit Rastzähnen versehenen, durch die Federvorspannung vorgespannten Hebel 57a aufweist, um einerseits den Einsatz der Sicherungsleiste auf Stromschienen unterschiedlicher Dimensionierung zu ermöglichen und andererseits nach dem Aufsetzen der Sicherungsleiste eine Verrasterung gegenüber der betreffenden, in Fig. 4 nicht gezeigten Stromschiene zu gewährleisten.

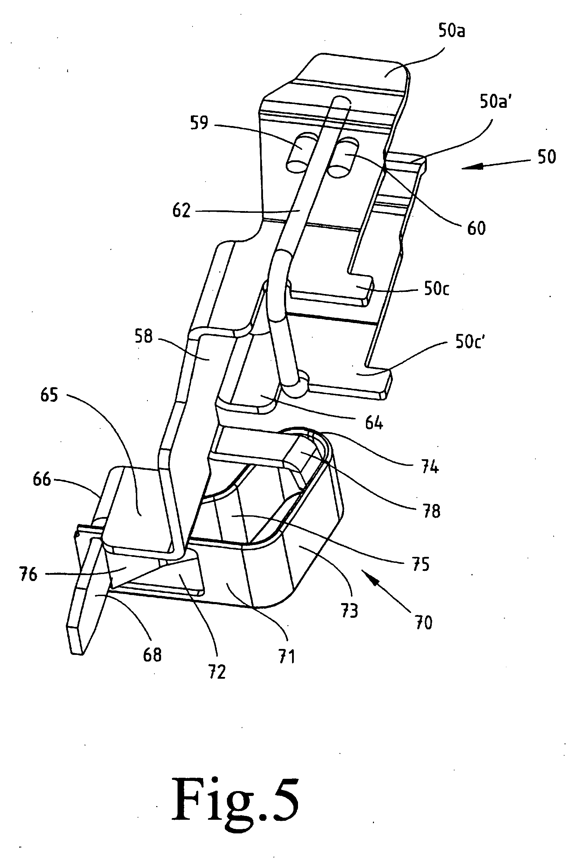

Fig. 5 zeigt in perspektivischer Ansicht einen Kontakt 50, wie er bei der Ausführungsform nach Fig. 4 vorzugsweise verwendet wird. Ersichtlicherweise wird je Pol ein derartiger Kontakt 50 vorgesehen und es werden pro Pol die Stromkreise definiert, wie sie vorstehend in Verbindung mit Fig. 4 in Bezug auf die Stromschiene 39 erläutert sind. Gleiches gilt auch für die übrigen Stromkreise bzw. die Stromschiene 38 mit dem Kontaktelement 36 oberhalb des Klemmfußes 7 und die Stromschiene 39 mit dem Kontaktelement 35 oberhalb des Klemmfußes 6.

Der Kontakt 50 gemäß Fig. 5 besteht vorzugsweise aus zwei im Wesentlichen spiegelsymmetrisch zueinander liegenden Kontaktzungen 50a, 50a'. Diese Kontaktzungen 50a, 50a' umgreifen das leitende Ende der Sicherung 48. Die beiden Kontaktzungen 50a, 50a' sind an einem mit 50c, 50c' bezeichneten Abschnitt durch einen Querbügel 58 fest und vorzugsweise federnd miteinander verbunden.

Beide Kontaktzungen 50a, 50a' weisen bei einer bevorzugten Ausführungsform jeweils außenseitig zwei zueinander parallele Rastnocken 59, 60 auf, die dazu vorgesehen sind, eine die beiden Kontaktzungen 50a, 50a' umgreifende U-förmige Feder 62 zu fixieren. Bei diesem in Fig. 5 gezeigten vorzugsweise eingesetzten Kontakt 50 ist die Kontaktzunge 50a' in Form eines gegenüber der Wand 50c schmäleren Steges 64 über den Querbügel 58 nach unten hinaus verlängert und bildet zusammen mit einem vom Steg 64 seitlich wegweisenden Abschnitt 65 eine etwa L-förmige Verlängerung. Der Abschnitt 65 ist mit einem weiteren, um 90° abgewinkelten Abschnitt 66 versehen, wobei der 90° Winkel zwischen den Abschnitten 65 und 66 in eine Richtung vorgegeben ist, derart, dass der Abschnitt 66 aus der Ebene der Zunge 50a' nach außen wegsteht, d. h. in eine Richtung entgegengesetzt zur Zunge 50a (Fig. 5). An dem Abschnitt 66 steht nach unten eine Verlängerung 68 ab, die geringere Breite hat als der Abschnitt 66, wie dies aus Fig. 5 ohne Weiteres erkennbar ist. Vorzugsweise als gegenüber dem Kontakt 50 zusätzliches Teil ist eine Feder 70 vorgesehen, wobei die Feder 70 alternativ auch als integriertes Teil zum Kontakt 50 ausgebildet sein kann.

Bei der dargestellten Ausführungsform ist die Feder 70 separat zum Kontakt 50 vorgesehen, derart, dass ein Schenkel 71 der Feder 70 mit einem Schlitz oder einer etwa rechteckigen Öffnung 72 versehen ist. Der Schenkel 71 steht unter einem Winkel von ca. 90°, vorzugsweise größer als 90° von einer Basis 73 der Feder 70 ab. An der Basis 73 ist nach einem etwa U-förmigen Übergangsabschnitt 74 ein weiterer Schenkel 75 vorgesehen, der gemäß Fig. 5 leicht V-förmig geschwungen ist und an seinem Ende eine Federzunge 76 trägt, die eine Breite aufweist, die geringfügig kleiner ist als die Breite des Schlitzes 72 und die gegen den Kontaktabschnitt 68 von diesem weg verschwenkbar anliegt.

Der Kontakt 50 mit der Feder 70 ist derart ausgelegt, dass ein abisoliertes Kabelende, d. h. eine Abgangsleitung in Fig. 5 von oben nach unten unter Verschwenkung der Federzunge 76 in Fig. 5 im Gegenuhrzeigersinn zwischen den Abschnitt 68 und die Federzunge 76 eingeführt werden kann, d. h. es ist ein schraubenloser Anschluss der Abgangsleitung möglich. Nach dem Einführen der Abgangsleitung in den Bereich zwischen Abschnitt 68 und Federzunge 76 wird durch die Wirkung der Federzunge 76, die schräg gegenüber der Achse der Abgangsleitung an der nicht gezeigten Abgangsleitung anliegt, ein Zurückziehen der Abgangsleitung aus dieser Eingriffsbeziehung verhindert. Um die Abgangsleitung aus dieser Eingriffsbeziehung entfernen zu können, ist mittels eines Werkzeuges, vorzugsweise eines Schraubenziehers, der durch die schlitzförmige Öffnung 22 in Fig. 1 in den Anschlussblock 10, 11 oder 12 eingeführt wird, eine Freigabe der eingeklemmten Abgangsleitung dadurch möglich, dass der Schraubenzieher auf den Schenkel 25 Druck ausübt, indem das Schraubenzieherende entweder auf die Federzunge 26 oder auf den etwa V-förmig gebogenen Abschnitt des Schenkels 75 wirkt und damit eine Verlagerung der Federzunge 76 im Uhrzeigersinn in Fig. 5 zur Freigabe der Abgangsleitung bewirkt.

Ersichtlicherweise befinden sich die Abgangskontakte, gebildet durch die Abschnitte 65, 66, 75, 76, 68, in jeweils einem der Anschlussblöcke 10, 11, 12, während der per Pol vorgesehene Kontakt 50 innerhalb des Gehäuses 1 in Fig. 1 seitlich eines Sicherungselementes und von diesem nach unten verlaufend in das Gehäuse 1 eingesetzt ist. Der Kontakt 50 liegt demnach oberhalb des jeweiligen Abgangskontaktes. Mit dem in Bezug auf Fig. 5 beschriebenen Kontakt 50 und der Feder 70, d. h. der aus den Abschnitten 50 und 70 gebildeten Kontaktanordnung wird erreicht, dass das mit der jeweiligen Sicherung in elektrischem Kontakt befindliche Bauteil 50 innerhalb des oberen Gehäuseteils der Sicherungsleiste etwa mittig angeordnet ist, während der Abschnitt in Form der Feder 70 zusammen mit den Abschnitten 65, 66, 68 seitlich nach außen zum Kontakt 50 versetzt ist, mit der Folge, dass die zugehörige Abgangsleitung seitlich versetzt zum Kontakt 50 in den Abgangskontakt in Form der Abschnitte 65, 66, 68, 76 eingeführt werden kann. Der eigentliche Abgangskontakt, gebildet durch die Abschnitte 65, 66, 68, 73, 74, 76 befindet sich also in einer Ebene, die parallel und seitlich nach außen versetzt liegt zur Ebene der jeweiligen Sicherung. Der Abgangskontakt ist durch diese Konstruktion seitlich in die Anschlussblöcke 10, 11, 12, also nach außen gegenüber dem Gehäuse 1 versetzt, angeordnet. Die seitliche Ausbildung der Führungen 18, 19, 20 zu den Abgangskontakten mit Klemmfeder 70 wird erfindungsgemäß dadurch möglich, dass der Federkontakt 70 gegenüber dem im Gehäuse 1 bzw. im Gehäuseoberteil befindlichen Kontakt 50 seitlich nach außen versetzt vorgesehen ist.

Wie sich aus Fig. 5 weiter ergibt ist bei der gezeigten bevorzugten Ausführungsform eines Kontaktes 50 an dem L-förmigen Abschnitt 64, 65 eine geschwungene Lasche 78 vorgesehen, die von der Fläche des Abschnitts 64, 65 absteht in Richtung auf die Ebene, in welcher die Feder 70 vorgesehen ist. Die Lasche 78 hat bei der dargestellten Ausführungsform vorzugsweise S-förmigen Verlauf und dient als Anschlag bzw. Begrenzung für die Basis 73. Der gesamte Kontakt 50 einschließlich Feder 70 wird nach dem Zusammenbau in der in Fig. 5 gezeigten Weise von der Seit her in das Gehäuse 1 in die dort vorgesehenen Aussparungen eingesetzt, und zwar pro vorgesehenem Pol.

Der Kontakt 50 sowie die Feder 70 bestehen aus Metall bzw. einem leitfähigem Material, während das Gehäuse selbst ganz oder zumindest teilweise aus Kunststoff, d. h. isolierendem Material hergestellt ist.

Die Verwendung der vorzugsweise in Verbindung mit Fig. 5 beschriebenen Kontaktanordnungen ermöglicht somit einen direkten Anschluss der Abgangsleitungen unmittelbar neben den innerhalb des Gehäuses 1 vorhandenen Sicherungselementen, so dass bei derartigen Sicherungsleisten übliche Verdrahtungen oder der Einbau von Kontaktbahnen von der betreffenden Sicherungsaufnahme bis zu einer vorgegebenen Stirnseite der Leiste entfallen. Auf diese Weise können die Sicherungsleisten zumindest im oberen Bereich des Gehäuses 1 sehr schmal und kompakt ausgeführt werden. Die seitlich angeformten, die Abgangskontakte aufnehmenden Anschlussblöcke 10, 11, 12 gewährleisten eine sehr gute Isolierung und verhindern auch Kriechströme zwischen den einzelnen, benachbarten Abgangskontakten aufgrund der Distanzierung der einzelnen Anschlussblöcke 10, 11, 12 zueinander in Längs- bzw. Achsrichtung der Leiste. Die Höhe der Anschlussblöcke 10, 11, 12 ist derart gewählt, dass die Eintrittsöffnungen der Führungen 18, 19, 20 in vorbestimmter Distanz zur Oberseite des Gehäuses 1 liegen und damit Abgangsleitungen auch parallel und in Axialrichtung zur Gehäuseoberseite 1 verlegt werden können, ohne dass dadurch die Handhabung der Hebel 2, 3, 4 durch die Abgangsleitungen in irgendeiner Weise beeinträchtigt wird.

Bei einer bevorzugten Ausführungsform ist vorgesehen, dass das Gehäuse 1 aus einem Gehäuseoberteil und einem Gehäuseunterteil besteht, wobei als Gehäuseunterteil der in Fig. 2 mit 1a bezeichnete Abschnitt gemeint ist, in welchen die einzelnen Kontaktanordnungen eingebracht werden können, während als Gehäuseoberteil die Platte 26 zu verstehen ist.

Zur Montage der Kontaktanordnungen wird das Gehäuseunterteil 1a um 90° gegenüber Fig. 2 nach hinten gedreht auf eine Montagefläche aufgelegt, wonach die einzelnen Kontaktanordnungen eingebracht werden einschließlich der Hebel 2, 3, 4, bevor die Platte oder Wand 26 als Gehäuseoberteil aufgesetzt und durch die beschriebenen Rasteinrichtungen 27, 31 fest mit dem Gehäuseunterteil 1a verbunden oder auf andere Weise miteinander montiert werden.

Bei einer weiteren Ausführungsform wird das Gehäuse 1 stirnseitig durch eine Abdeckung 80 abgeschlossen.

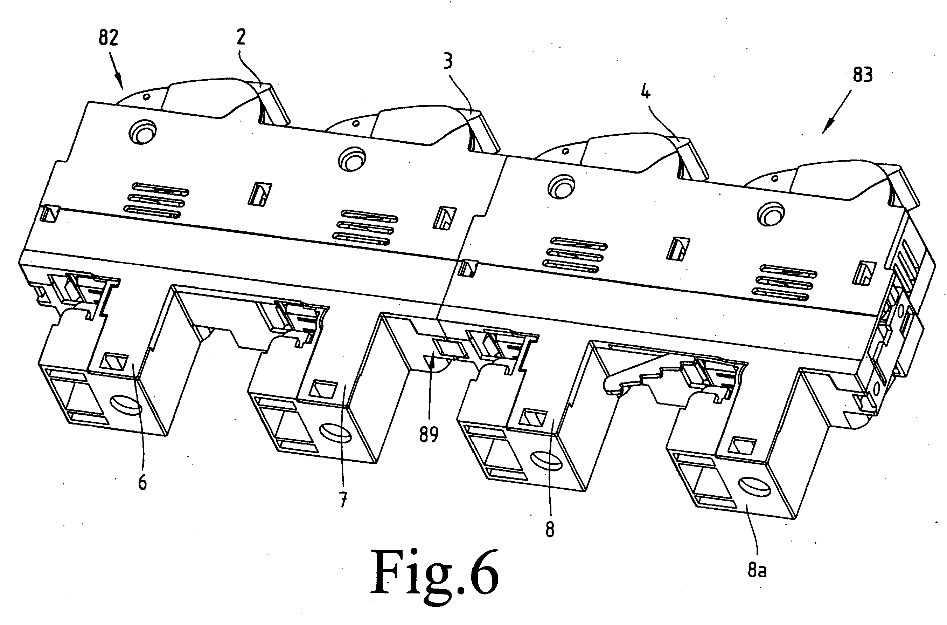

Fig. 6 zeigt zwei zweipolige Sicherungsleisten, die einen Aufbau haben, wie er im Wesentlichen in Bezug auf Fig. 1 bis 5 beschrieben ist. Gleiche Teile sind mit gleichen Bezugszeichen wie in den Figuren 1 bis 5 versehen.

Gemäß Fig. 6 sind zwei zweipolige Sicherungsleisten fest miteinander gekoppelt, wobei z. B. die Verbindung mittels Schwalbenschwanzführung 89 oder Ähnlichem vorgesehen sein kann. Jedenfalls sind die beiden in Fig. 6 dargestellten zweipoligen Sicherungsleisten von gleichem Aufbau, d. h. es ist eine Sicherungsleiste 82 und eine weitere Sicherungsleiste 83 vorgesehen, die zueinander identischen Aufbau aufweisen und die im Bedarfsfall zu einer vierpoligen Sicherungsleiste zusammengesetzt werden können, wobei bei einer derartigen vierpoligen Sicherungsleiste der Teilungsabstand jeweils gleich ist, d. h. der Abstand zwischen Klemmfuß 6 und Klemmfuß 7 entspricht dem Abstand zwischen Klemmfuß 7 und Klemmfuß 8. Entsprechend sind die in Fig. 6 nicht dargestellten, auf der abgewandten Seite befindlichen Anschlussblöcke für die Abgangskontakte in gleichem Abstand zueinander vorgesehen.

Der wesentliche Vorteil der in Verbindung mit Fig. 6 beschriebenen Sicherungsleiste besteht somit darin, dass wahlweise zweipolige oder vierpolige Sicherungsleisten aus identischen Elementen zusammengesetzt werden können und dabei der Anschluss der Abgangsleitungen schraubenlos durch Einschieben der Abgangsleitungen in die Abgangskontakte der Anschlussblöcke vorgenommen werden kann. Es lässt sich damit eine sehr schnelle Montage der gesamten Sicherungsleisten in Verbindung mit den zugehörigen Schaltgeräten erreichen.

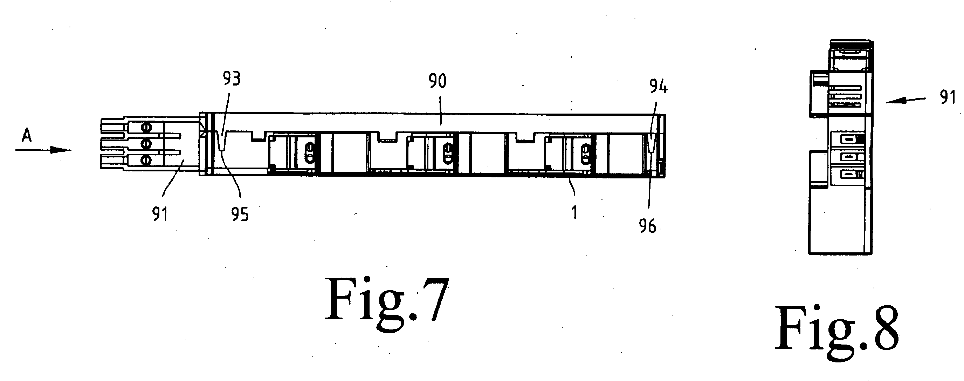

Fig. 7 zeigt eine Draufsicht auf eine weitere Ausführungsform der Erfindung unter Zugrundelegung der Sicherungsleiste, wie sie in Verbindung mit Fig. 1 bis 5 beschrieben ist. Bei dieser Ausführungsform sind, wie oben erläutert, seitliche Anschlussblöcke 10, 11, 12 vorgesehen, die bei der Ausführungsform nach Fig. 1 bis 5 dazu dienen, Abgangsleitungen vorzugsweise schraubenlos in die zugehörigen Abgangskontakte mit Klemmfedern einzuführen. Die Ausführungsform nach Fig. 7 bis 9 bezweckt eine Abwandlung der Sicherungsleiste dahingehend, dass unter Verwendung der gleichen Sicherungsleiste im Bedarfsfall stirnseitige Anschlussklemmen benutzbar sind. Zu diesem Zweck sieht vorliegende Erfindung vor, die seitlichen Anschlussblöcke durch eine Adapterleiste 90 zu kontaktieren, wobei die Adapterleiste 90 an einem Ende ein Modul 91 für Schraubklemmen oder dergleichen aufweist. Fig. 7 zeigt die Sicherungsleiste nach Fig. 1 bis 5 mit einer zusätzlichen, seitlich angesetzten Adapterleiste 90 und dem stirnseitig der Sicherungsleiste vorhandenen Modul 91 für Schraubklemmen.

Die Adapterleiste 90 hat eine Breite quer zur Längsachse, die der Breite der Anschlussblöcke 10, 11, 12, ebenfalls quer zur Längsachse betrachtet, entspricht. Zur Befestigung der Adapterleiste 90 dienen Führungsglieder 93, 94, die in entsprechende Gegenführungen 95, 96 gehäuseseitig eingreifen.

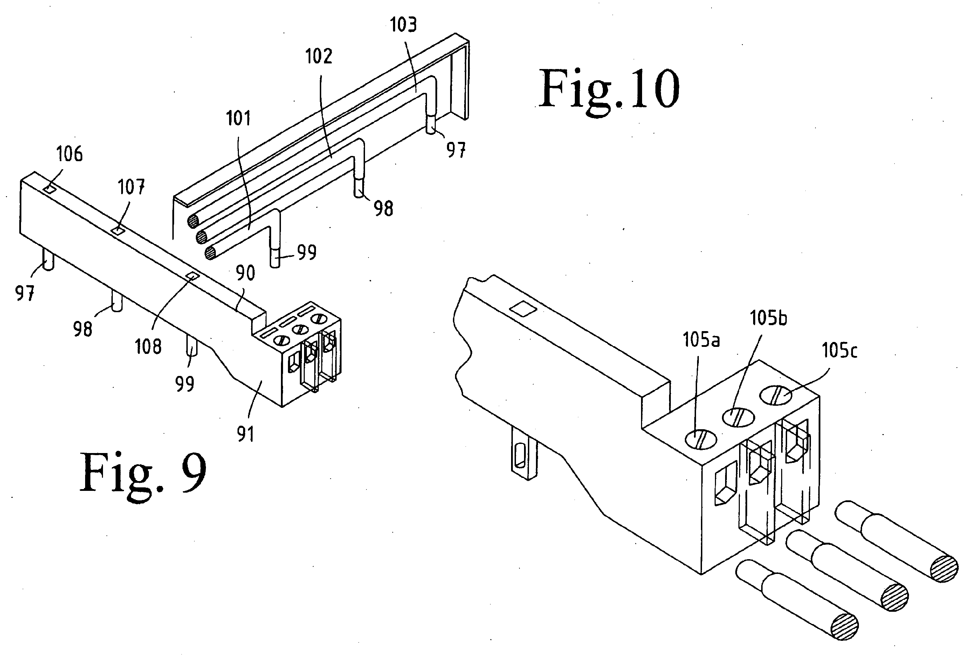

Wie es sich aus der schematischen Darstellung nach Fig. 9 ergibt, ist jede Adapterleiste 90 mit Anschlussstiften 97, 98, 99 ausgerüstet, die von der Adapterleiste 90 jeweils nach unten abstreben und dazu dienen, in die Führungen 18, 19, 20 der Anschlussblöcke eingeschoben zu werden, um eine elektrische Verbindung mit den Abgangsklemmen der Sicherungsleiste herzustellen. Gemäß Fig. 9 ist das Modul 91 an einem Ende der Adapterleiste 90 etwa senkrecht seitlich davon abstrebend an diesem integriert ausgebildet. Die Adapaterleiste 90 selbst kann in verschiedener Weise Verbindungsleiter 101, 102, 103 aufweisen, welche von den Anschlussstiften 97, 98, 99 in Richtung zu dem Anschlussmodul 91 geführt sind.

Fig. 10 zeigt ein Beispiel, wie diese Verbindungsabschnitte 101, 102, 103 ausgebildet sein können. Vorzugsweise wird die Adapterleiste 90 entsprechend Fig. 10 mit integrierten Leiterbahnen ausgerüstet, die fest in der Adapterleiste 90 ausgebildet sind oder zum Beispiel in Form einer gedruckten Schaltung mit Anschlussstiften 97, 98, 99, so dass die Leiterbahnen 101, 102, 103 in eine Leiterplatte oder dergleichen integriert sind und die Leiterplatte stirnseitig mit dem Anschlussmodul 91 mechanisch und elektrisch verbunden ist.

Die Schraubklemmen 105a, b, c des Anschlussmoduls 91 sind herkömmlicher Art und brauchen daher nicht im Detail erläutert werden.

Mit dem erfindungsgemäßen Adapterteil 90 ist es somit möglich, die Sicherungsleiste nach den Figuren 1 bis 5 derart umzugestalten, dass die Anschlusskontakte von der Seite zur Stirnseite verlegt sind.

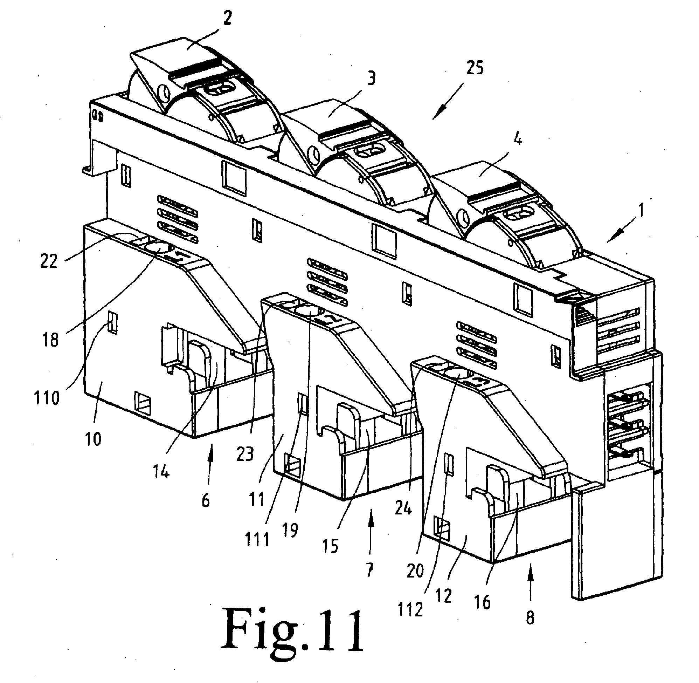

Gemäß einer weiteren Ausführungsform der Erfindung ist jede Adapterleiste mit Schlitzen 106, 107, 108 versehen, die geringfügig vertikal versetzt zu den Anschlussstiften 97 bis 99 ausgebildet sind und an den Leitern bzw. Verbindungen 101, 102, 103 vorbeigeführt sind, um eine einmal aufgesetzte Adapterleiste 90 gegenüber der Sicherungsleiste bzw. den Anschlussblöcken freizugeben, ähnlich, wie dies in Verbindung mit den Betätigungsschlitzen 22, 23, 24 (Fig. 1) erläutert ist. Die Schlitze 106, 107, 108 müssen bei dieser Ausführungsform mit den Schlitzen 22, 23, 24 fluchten, um einen Zugang mittels eines Werkzeuges zu der Federzunge 76 bzw. dem Betätigungsbereich 75 zu ermöglichen. Alternativ hierzu können die Schlitze 106, 107, 108 durch Schlitze 110, 111, 112 ersetzt sein, die seitlich in der Wand des jeweiligen Anschlussblockes 10, 11, 12 ausgebildet sind. Wird mit Hilfe eines Werkzeuges, beispielsweise eines Schraubenziehers dieses Ende in einen der Schlitze 110, 111, 112 (Fig. 11) eingeführt, lässt sich die Klemmwirkung zwischen dem betreffenden Kontaktstift 97 bis 99 aufheben, so dass das Modul 90 abgehoben werden kann, indem mittels Schraubenzieher oder dergleichen die Federzunge 76 (Fig. 9) im Gegenuhrzeigersinn verschwenkt wird und den zugehörigen Kontaktstift freigibt.

## Patentansprüche

1. Sicherungsleiste, mit einem Gehäuse, vorzugsweise aus Kunststoff, mit mindestens zwei im Gehäuse (1) angeordneten Aufnahmeeinrichtungen für Sicherungselemente (48),
mit an der Unterseite des Gehäuses (1) vorgesehenen Klemmfüßen (6, 7, 8),
bei der im Bereich jedes Klemmfußes (6, 7, 8) ein Kontakt (37, 38, 39) zur Kontaktierung der zugehörigen Stromschiene (38, 39) ausgebildet ist,
**dadurch gekennzeichnet,**
**dass** seitlich des Gehäuses (1) im Bereich jedes Klemmfußes (6, 7, 8) je Pol ein seitlich angeformter Anschlussblock (10, 11, 12) vorgesehen ist, der jeweils einen Abgangskontakt (50, 70) aufnimmt zum Anschließen einer Abgangsleitung,
**dass** in jedem Anschlussblock eine Führung (18, 19, 20) ausgebildet ist zur Aufnahme eines Kontaktstiftes (97, 98, 99) einer Adapterleiste (90) derart, dass bei aufgesetzter Adapterleiste (90) jeder Kontaktstift (97, 98, 99) mit dem zugehörigen Abgangskontakt (50, 70) jedes Anschlussblockes (10, 11, 12) in elektrischer Verbindung steht, und
**dass** die Adapterleiste (90) mit einem stirnseitigen Modul (91) mit Anschlussklemmen (105a, 105b, 105c) versehen ist.

2. Sicherungsleiste nach Anspruch 1,
**dadurch gekennzeichnet,**
**dass** die Adapterleiste (90) elektrische Leiter (101, 102, 103) oder dergleichen enthält, die eine Verbindung zwischen den Kontaktstiften (97, 98, 99) einerseits und den Anschlussklemmen (105a, 105b, 105c) des Moduls (91) andererseits herstellen.

3. Sicherungsleiste nach Anspruch 1 oder 2,
**dadurch gekennzeichnet,**
**dass** die Adapterleiste (90) mit durchgehenden Öffnungen (106, 107, 108) versehen ist, die gegenüber den Schlitzen (22, 23, 24) fluchten, wenn die Adapterleiste (90) auf das Gehäuse (1) aufgesetzt ist.

4. Sicherungsleiste nach einem der Ansprüche 1 oder 2,
**dadurch gekennzeichnet,**
**dass** die Anschlussblöcke (10, 11, 12).seitliche Öffnungen (110, 111, 112) aufweisen, die einen Zugang zum jeweiligen Klemmfederabschnitt (76) ermöglichen.

5. Sicherungsleiste nach Anspruch 1,
**dadurch gekennzeichnet,**
**dass** jeder Anschlussblock (10, 11, 12) eine Führung (18, 19, 20) zum Einführen von Abgangsleitungen aufweist.

6. Sicherungsleiste nach Anspruch 1 oder 2,
**dadurch gekennzeichnet,**
**dass** jeder Anschlussblock (10, 11, 12) eine weitere, vorzugsweise schlitzförmige Öffnung (22, 23, 50, 70, 24) aufweist zur Einführung eines Werkzeuges in Richtung auf den Abgangskontakt zur Freigabe einer Abgangsleitung.

7. Sicherungsleiste nach einem der vorangehenden Ansprüche,
**dadurch gekennzeichnet,**
**dass** die Führungen (18, 19, 20) im Wesentlichen senkrecht zur Längsachse der Sicherungsleiste ausgebildet sind.

8. Sicherungsleiste nach einem der vorangehenden Ansprüche,
**dadurch gekennzeichnet,**
**dass** jeder Abgangskontakt (50, 70) einen Kontakt (50) und eine Klemmfeder (70) aufweist, wobei die Klemmfeder (70) eine Federzunge (76) aufweist, die unter Federvorspannung gegen einen Kontaktabschnitt (68) des Kontaktes (50) steht.

9. Sicherungsleiste nach einem der vorangehenden Ansprüche,
**dadurch gekennzeichnet,**
**dass** jeder Kontakt (50) einen verlängerten Kontaktabschnitt (64, 65) aufweist, an dem ein vom Kontakt (50) weg weisender Abschnitt (66) ausgebildet ist, welcher eine Kontaktzunge (68) zur Aufnahme der Klemmfeder (70) aufweist.

10. Sicherungsleiste nach Anspruch 6,
**dadurch gekennzeichnet,**
**dass** die Klemmfeder (70) seitlich zum Kontakt (50) versetzt vorgesehen ist.

11. Sicherungsleiste nach einem der vorangehenden Ansprüche,
**dadurch gekennzeichnet,**
**dass** die Klemmfeder (70) ein zum Kontakt (50) separates Teil ist und einen Schenkel (71) mit einem Schlitz (72) aufweist, derart, dass innerhalb des Schlitzes (72) eine Kontaktfederzunge (76) der Klemmfeder (70) verstellbar angeordnet ist und der Schlitz (72) die Kontaktzunge (68) des Kontaktes (50) aufnimmt.

12. Sicherungsleiste nach wenigstens einem der vorangehenden Ansprüche,
**dadurch gekennzeichnet,**
**dass** jeder Kontakt (50) zwei zueinander etwa parallele, spiegelsymmetrisch zueinander liegende Kontaktzungen (50a, 50a') aufweist.

## Claims

1. Fuse strip comprising:
a housing preferably made of plastic material with at least two receiving means arranged in said housing (1) for receiving fuse elements (48), and
clamping feet (6, 7, 8) provided on the lower surface of said housing (1);
in which a contact (37, 38, 39) for contacting the associated conductor rail (38, 39) is configured in the region of each clamping foot (6, 7, 8),
**characterized in that** laterally of said housing (1) in the region of each clamping foot (6, 7, 8) there is provided for each pole one laterally formed terminal block (10, 11, 12) respectively receiving an outgoing contact (50, 70) for connecting an outgoing line;
that in each terminal block a guide (18, 19, 20) for receiving a contact pin (97, 98, 99) of an adapter strip (90) is configured so that each contact pin (97, 98, 99) is electrically connected to the associated outgoing contact (50, 70) of each terminal block (10, 11, 12) when the adapter strip (90) is attached; and
that the adapter strip (90) is provided with an end-face module (91) comprising terminal clamps (105a, 105b, 105c).

2. Fuse strip according to claim 1, **characterized in that** the adapter strip (90) includes electrical conductors (101, 102, 103) or the like which establish a connection between the contact pins (97, 98, 99), on the one hand, and the terminal clamps (105a, 105b, 105c) of the module (91), on the other hand.

3. Fuse strip according to claim 1 or 2, **characterized in that** said adapter strip (90) is provided with through holes (106, 107, 108) which are aligned with respect to the slots (22, 23, 24) when said adapter strip (90) is attached to said housing (1).

4. Fuse strip according to claim 1 or 2, **characterized in that** said terminal blocks (10, 11, 12) have lateral openings (110, 111, 112) allowing access to the respective clamping spring portion (76).

5. Fuse strip according to claim 1, **characterized in that** each terminal block (10, 11, 12) comprises a guide (18, 19, 20) for the insertion of outgoing lines.

6. Fuse strip according to claim 1 or 2, **characterized in that** each terminal block (10, 11, 12) comprises another preferably slit-shaped opening (22, 23, 50, 70, 24) for the insertion of a tool toward the outgoing contact for clearing an outgoing line.

7. Fuse strip according to one of the preceding claims, **characterized in that** said guides (18, 19, 20) are formed substantially perpendicularly to the longitudinal axis of the fuse strip.

8. Fuse strip according to one of the preceding claims, **characterized in that** each outgoing contact (50, 70) comprises a contact (50) and a clamping spring (70), said clamping spring (70) having a spring tongue (76) which is biased against a contact portion (68) of said contact (50).

9. Fuse strip according to one of the preceding claims, **characterized in that** each contact (50) has an extended contact portion (64, 65) on which there is formed a portion (66) which points away from said contact (50) and has a contact tongue (68) for receiving said clamping spring (70).

10. Fuse strip according to claim 6, **characterized in that** said clamping spring (70) is provided laterally offset to said contact (50).

11. Fuse strip according to one of the preceding claims, **characterized in that** said clamping spring (70) is a part separate from said contact (50) and has an arm (71) comprising a slot (72) in such a way that a contact spring tongue (76) of said clamping spring (70) is adjustably arranged within said slot (72) and said slot (72) receives the contact tongue (68) of said contact (50).

12. Fuse strip according to at least one of the preceding claims, **characterized in that** each contact (50) has two contact tongues (50a, 50a') located approximately parallel and mirror-symmetrically to each other.

## Revendications

1. Barrette de fusibles dotée d'un boîtier, préférentiellement en matière plastique, munie d'au moins deux dispositifs de réception disposés dans le boîtier (1) destinés à des éléments de sécurité (48), avec des montants de serrage (6, 7, 8) prévus sur la partie inférieure du boîtier (1), sur laquelle est formé, dans la zone de chaque montant de serrage (6, 7, 8), un contact (37, 38, 39) destiné à la mise en contact de la barre conductrice associée (38, 39), **caractérisée par le fait qu'**un bloc de raccordement (10, 11, 12) mis en forme latéralement, qui reçoit respectivement un contact de sortie (50, 70) pour le raccordement d'une ligne de sortie, est prévu pour chaque pôle sur le côté du boîtier (1) dans la zone de chaque montant de serrage (6, 7, 8),
qu'un guidage (18, 19, 20) est formé pour la réception d'une broche de contact (97, 98, 99) d'une barrette d'adaptation (90) dans chaque bloc de raccordement de telle sorte que, pour une barrette d'adaptation (90) posée, chaque broche de contact (97, 98, 99) se trouve en liaison électrique avec le contact de sortie (50, 70) de chaque bloc de raccordement (10, 11, 12), et
que la barrette d'adaptation (90) est dotée d'un module frontal (91) muni de bornes de raccordement (105a, 105b, 105c).

2. Barrette de fusibles selon la revendication 1, **caractérisée par le fait que** la barrette d'adaptation (90) comprend des conducteurs électriques (101, 102, 103) ou similaires, qui établissent une liaison entre les broches de contact (97, 98, 99) d'un côté et les bornes de raccordement (105a, 105b, 105c) du module (91) d'un autre côté.

3. Barrette de fusibles selon la revendication 1 ou 2, **caractérisée par le fait que** la barrette d'adaptation (90) est dotée d'ouvertures continues (106, 107, 108) s'alignant par rapport aux fentes (22, 23, 24) quand la barrette d'adaptation (90) est posée sur le boîtier (1).

4. Barrette de fusibles selon l'une des revendications 1 ou 2, **caractérisée par le fait que** les blocs de raccordement (10, 11, 12) présentent des ouvertures latérales (110, 111, 112) permettant un accès aux sections de ressort de serrage (76) respectives.

5. Barrette de fusibles selon la revendication 1, **caractérisée par le fait que** chaque bloc de raccordement (10, 11, 12) présente un guidage (18, 19, 20) destiné à l'introduction de lignes de sortie.

6. Barrette de fusibles selon la revendication 1 ou 2, **caractérisée par le fait que** chaque bloc de raccordement (10, 11, 12) présente une ouverture (22, 23, 50, 70, 24) supplémentaire préférentiellement en forme de fente destinée à l'introduction d'un outil en direction du contact de sortie afin de libérer une ligne de sortie.

7. Barrette de fusibles selon l'une des revendications précédentes, **caractérisée par le fait que** les guidages (18, 19, 20) sont configurés essentiellement verticalement par rapport à l'axe longitudinal de la barrette de fusibles.

8. Barrette de fusibles selon l'une des revendications précédentes, **caractérisée par le fait que** chaque contact de sortie (50, 70) présente un contact (50) et une pince de serrage (70), la pince de serrage (70) présentant une languette élastique (76) se trouvant sous précontrainte du ressort contre une section de contact (68) du contact (50).

9. Barrette de fusibles selon l'une des revendications précédentes, **caractérisée par le fait que** chaque contact (50) présente une section de contact (64, 65) prolongée, sur laquelle est formée une section (66) s'éloignant du contact (50), cette section présentant une lame de contact (68) destinée à recevoir la pince de serrage (70).

10. Barrette de fusibles selon la revendication 6, **caractérisée par le fait que** la pince de serrage (70) est prévue de manière latéralement décalée par rapport au contact (50).

11. Barrette de fusibles selon l'une des revendications précédentes, **caractérisée par le fait que** la pince de serrage (70) est une partie séparée du contact (50) et présente une aile (71) dotée d'une fente (72) de telle sorte qu'une languette de contact élastique (76) de la pince de serrage (70) est disposée à l'intérieur de la fente (72) de manière réglable et que la fente (72) reçoit la lame de contact (68) du contact (50).

12. Barrette de fusibles selon au moins l'une quelconque des revendications précédentes, **caractérisée par le fait que** chaque contact (50) présente deux lames de contact (50a, 50a') disposées approximativement de façon parallèle entre elles, l'une en face de l'autre de façon symétrique.
